Europäisches Patentamt

European Patent Office

Office européen des brevets

(11) Publication number: **0 411 836 A2**

# EUROPEAN PATENT APPLICATION

(21) Application number: **90308250.1**

(22) Date of filing: **27.07.90**

(51) Int. Cl.⁵: **G06F 15/60, G06F 15/16**

(30) Priority: **31.07.89 JP 198341/89**
**31.07.89 JP 198317/89**

(43) Date of publication of application:
**06.02.91 Bulletin 91/06**

(84) Designated Contracting States:
**DE FR GB**

(71) Applicant: **KABUSHIKI KAISHA TOSHIBA**
**72, Horikawa-cho Saiwai-ku**
**Kawasaki-shi Kanagawa-ken 210(JP)**

(72) Inventor: **Shimizu, Noriaki, C/o Intellectual**
**Property Div.**
**Toshiba Corporation, 1-1- Shibaura**
**Minato-ku, Tokyo(JP)**

(74) Representative: **BATCHELLOR, KIRK & CO.CO.**
**2 Pear Tree Court Farringdon Road**
**London EC1R 0DS(GB)**

(54) **Image processing apparatus.**

(57) An image processing apparatus for processing a communication of image information between an optical disc (20) and external information handling device. The apparatus includes an interface controller for interfacing the external information handling means to the apparatus, an optical disc driver for driving the optical disc (20) to store the image information together with associated information for retrieving image information and to reproduce a desired image information from the optical disc (20) by using the associated retrieving information, a main CPU (34) for commanding the communication of the image information between the optical disc (20) and the external information handling device and for supplying associated information for communicating the image information, a common memory (70) for storing the associated communicating information from the main CPU (34) and a sub CPU (62) responsive to the main CPU (34) for controlling the interface controller (82, 83, 84) and the optical disc driver (22) to communicate the image information under the control of the associated communicating information stored in the common memory (70).

EP 0 411 836 A2

# IMAGE PROCESSING APPARATUS

The present invention relates generally to an image processing apparatus, and more particularly, to an image processing apparatus such as an image filing apparatus which is able to communicate with an external device through a communication line. Recently, an image processing apparatus has been put in practical use which reads image data, such as documents created in large quantities, through a two-dimensional scanner, stores this read image data on an optical disc, retrieves and reads the stored image data and outputs them in a visible state on an output device, for instance, a CRT display device. In such an image processing apparatus, a microcomputer (hereinafter referred to as CPU) is used as a processor to process or retrieve image data read out of an optical disc device, and this CPU is capable of accessing memories and various processing modules of the apparatus. A communication interface is generally provided as one of such processing modules, for the purpose of transmitting/receiving image information between the image processing apparatus and external devices via communication circuits. This communication interface operates under the control of the CPU. However, one problem with such image processing apparatus is that the CPU directly controls the communication interface, The CPU may become heavily loaded and the system will not meet the prescribed performance. This may happen many kinds of external devices are connected to the communication interface, each requiring different rapid processing capabilities. This defect was most apparent when external devices having large loads, as a LAN (Local Area Network) controller or the like, were connected to the CPU. A DMA (Direct Memory Access) channel is generally provided as another of the processing modules. Under the control of this DMA channel, the transmitting/receiving of image information is performed between a memory and an external device through the system bus. Therefore, a request for use of the system bus may be generated simultaneously from both the CPU and the DMA channel. When this happens, it becomes necessary to mediate and control which of the CPU and DMA channel have the right to use the system bus. Where there are multiple bus masters, a round robin system of bus mediations has been known. This round robin system is a method to control use of the bus by giving the lowest priority to the bus master which used the bus most recently to prevent the use of the bus from being concentrated in specific bus masters. This round robin system however, had a defect in that as the number of bus masters increased, the bus control circuit became more complicated and the number of hardware elements containing image processing apparatus increased. As described above, in the one of the processing modules the CPU directly controls the communication interface. Thus, the CPU may become heavily loaded and the entire system may not display the prescribed performance because many kinds devices are connected to the communication interface. This requires the interface to provide different type of processing rapidly to each of these external devices. In the other type of processing module, as the number of bus masters increases, the mediation control circuit becomes more complicated and the number of hardware elements increases if the round robin system is used. The present invention therefore seeks to provide an image processing apparatus which is able to overcome the disadvantages of the conventional apparatus. The present invention also seeks to provide an image processing apparatus which is able to reduce the load on the CPU and to perform as designed. The present invention further seeks to provide an image processing apparatus in which the mediation control circuit is not complicated even if the number of bus masters increases, so that the increase in the amount of hardware elements can be constrained. Accordingly, the present invention provides an image processing apparatus for controlling the communication of image information between a recording medium and external information handling means, which comprises at least one interfacing means for interfacing the external information handling means to the apparatus and means for driving the recording medium to store the image information together with associated retrieval information and to reproduce a desired image information from the recording medium by using the associated retrieval information, characterised in that the apparatus further comprises:

first processing means for commanding the communication of the image information between the recording medium and the external information handling means and for supplying associated information for communicating the image information;

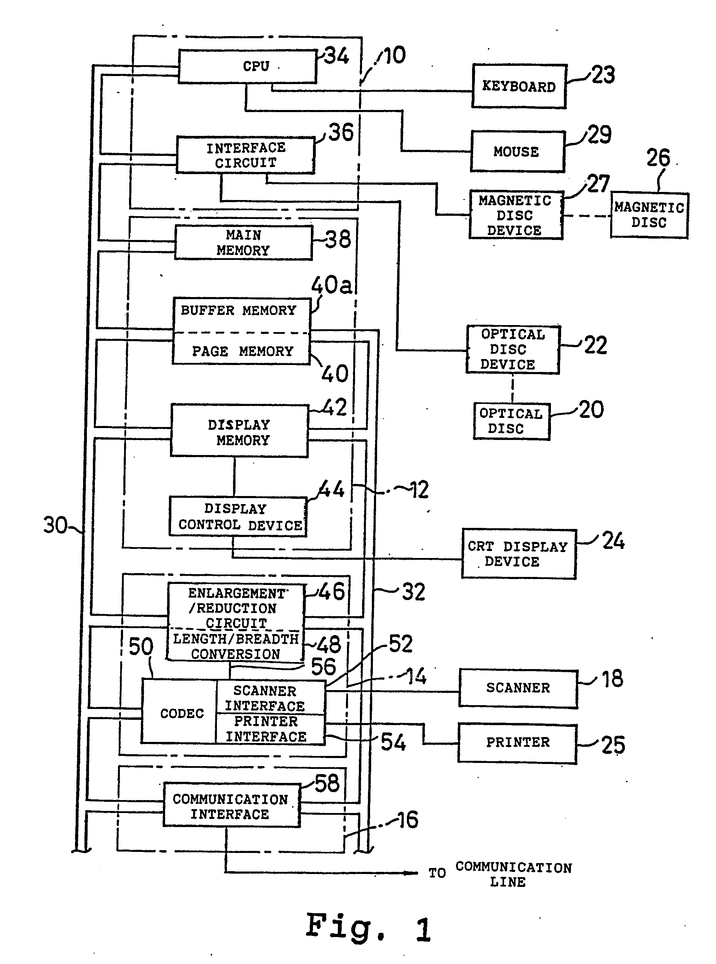

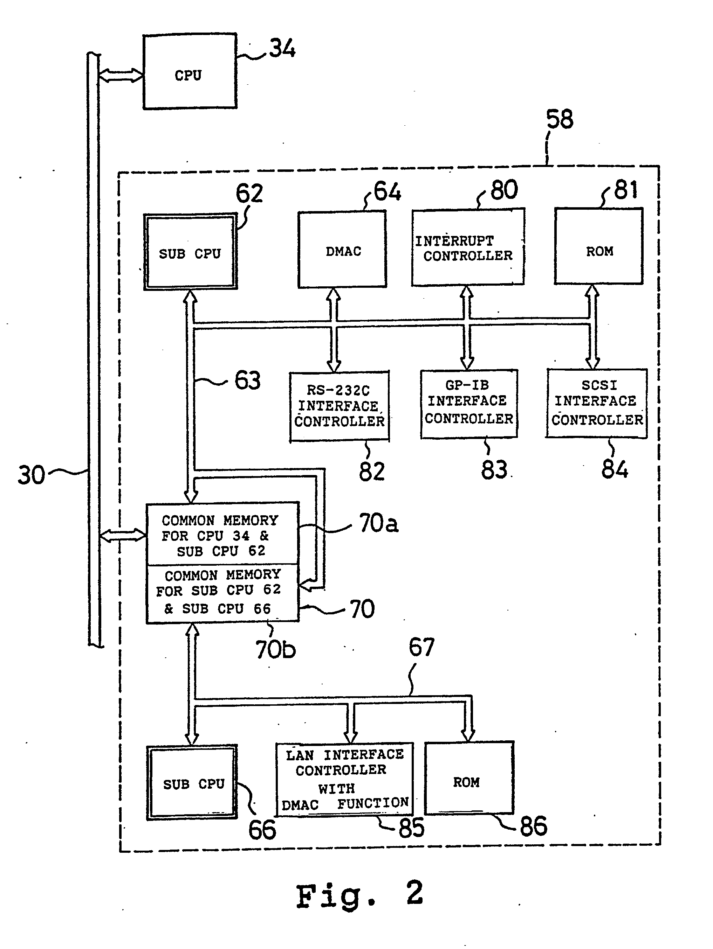

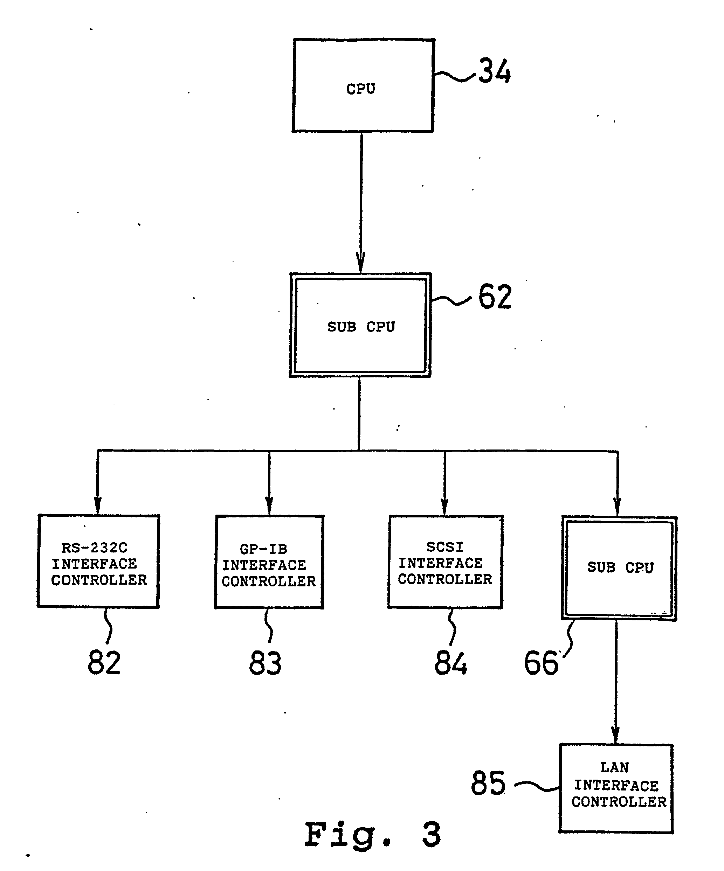

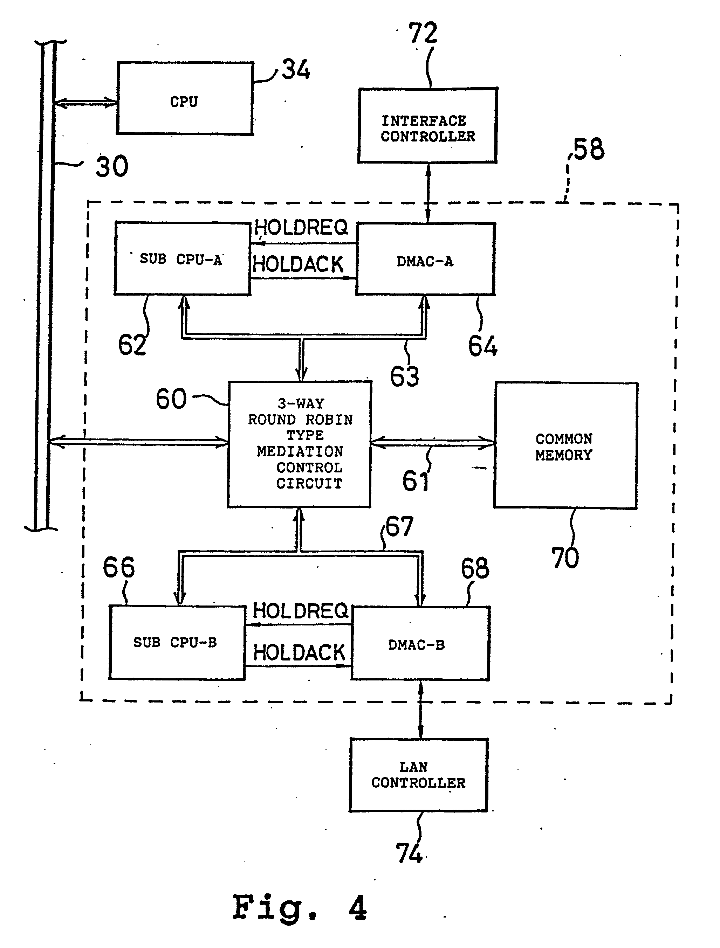

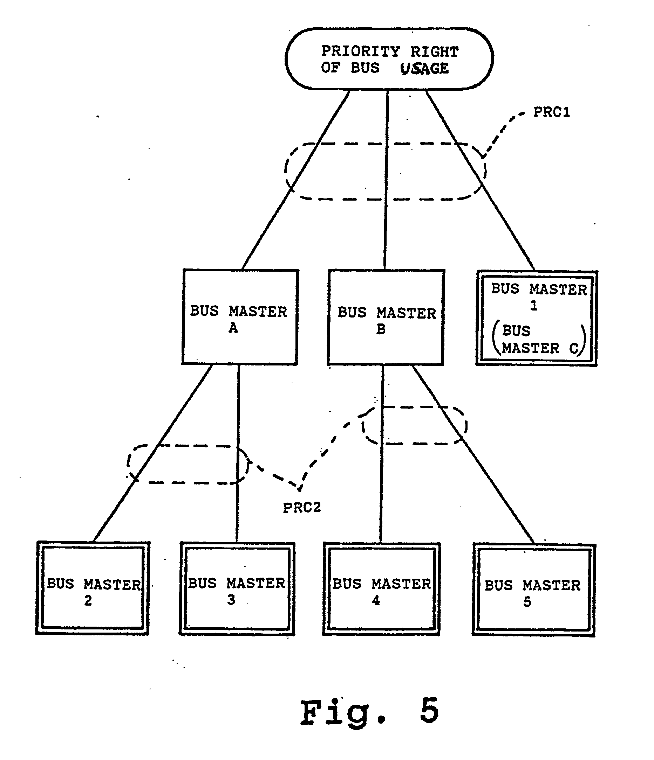

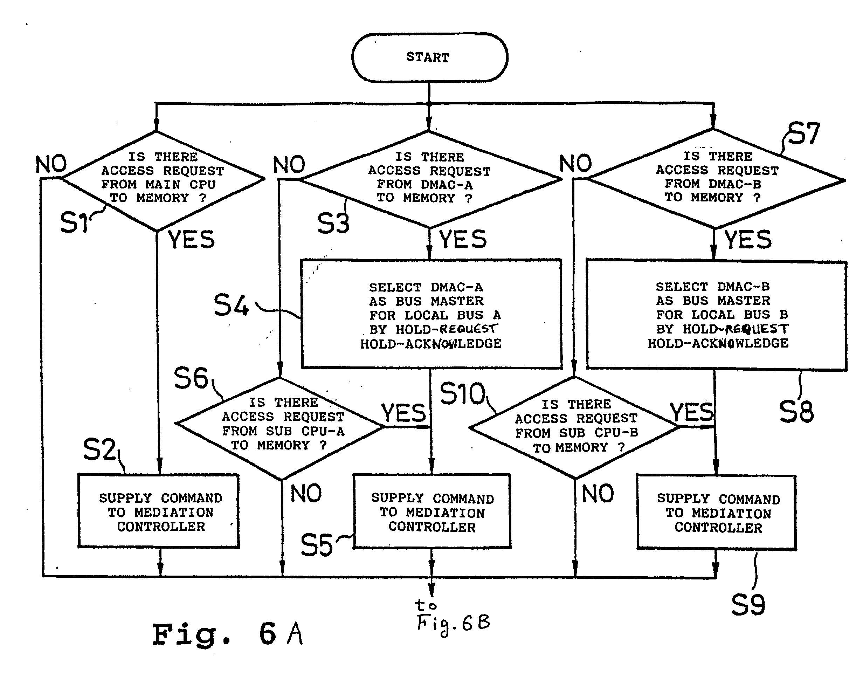

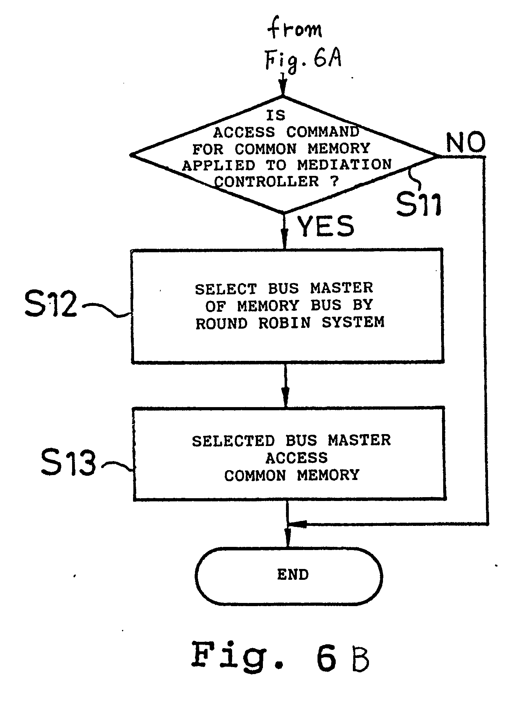

storage means for storing the associated communication information from the first processing means; and

second processing means responsive to the first processing means for controlling the interfacing means and the driving means to communicate the image information under the control of the associated communicating information stored in the storage means. An image processing apparatus for processing a communication of image information between an optical disc and external information handling device according to another aspect of the present invention includes first and second interface controllers for interfacing the external information handling means to the apparatus, an optical disc driver for driving the recording medium to store the image information together with associated information for retrieving image information and to reproduce a desired image information from the recording medium by using the associated retrieving information, a main CPU for commanding the communication of the image information between the recording medium and the external information handling means and for supplying associated information for communicating the image information, a first common memory for storing the associated communicating information from the main CPU, a first sub CPU responsive to the main CPU for controlling the first interface controller and the optical disc driver to communicate the image information under the control of the associated communicating information stored in the first common memory when the communication of the image information through the first interface controller is commanded by the main CPU, the first sub CPU also commanding the communication of the image information between the recording medium and the external information handling means and for supplying associated information for communicating the image information when the communication of the image information through the second interface controller is commanded by the main CPU, a second common memory for storing the associated communicating information from the first common memory and a second sub CPU responsive to the first sub CPU for controlling the second interface controller and the optical disc driver to communicate the image information under the control of the associated communicating information stored in the second common memory. For a better understanding of the present invention and many of the attendant advantages thereof reference will now be made by way of example to the accompanying drawings, wherein: FIGURE 1 is a block diagram briefly showing the general construction of the image processing apparatus; FIGURE 2 is a block diagram briefly showing the construction of the communication interface of the first embodiment of the image processing apparatus according to the present invention; FIGURE 3 is a diagram showing the control system for explaining the operation of the first embodiment of the image processing apparatus according to the present invention; FIGURE 4 is a block diagram briefly showing the construction of the communication interface of the second embodiment of the image processing apparatus according to the present invention; FIGURE 5 is a diagram for explaining the concept of the bus mediation control operation for the second embodiment of the image processing apparatus according to the present invention; and FIGURES 6A and 6B are flowcharts for explaining the operation of the second embodiment of the image processing apparatus according to the present invention when combined together. The present invention will be described in detail with reference to the FIGURES through 6B. Throughout the drawings, like or equivalent reference numerals or letters will be used to designate like or equivalent elements for simplicity of explanation. Referring now to FIGURE 1, the general construction of the image processing apparatus will be briefly explained before a detailed description of the present invention is presented. FIGURE 1 is a block diagram showing the general construction of the image processing apparatus. The image processing apparatus comprises a control module 10, a memory module 12, an image processing module 14, a communication control module 16, a scanner 18, an optical disc 20 and an optical disc device 22, keyboard 23, CRT display device 24, printer 25, magnetic disc 26 and magnetic disc device 27, mouse 29, system bus 30 and image bus 32. The control module 10 comprises a CPU 34 which performs various processes such as storage, retrieval and edit of image information, etc. and the interface circuit 36 which connects the optical disc device 22 and the magnetic disc device 27 to the CPU 34. The keyboard 23 and the mouse 29 are connected to the CPU 34. The interface circuit 36 includes a DMA channel and its associated circuits and transfers data at high speed between the optical disc device 22 or the magnetic disc device 27 and memories in the memory module 12, the image processing module 14 or the communication control module without involving the CPU 34. The memory module 12 comprises the main memory 38 which stores various process programs (which perform operations such as storage, retrieval, edit, etc. of image information and control data, etc.), the page memory 40, (which is an image memory having a storage capacity corresponding to image information of several pages of A4 size document), the display memory 42 as a display interface, and the display control device 44. A part of the page memory 40 is allocated to the buffer memory region 40a. Write/read to/from this buffer memory region 40a is controlled by an unillustrated counter. The page memory 40 is a memory for temporarily storing, for instance, image information to be stored in or read out of the optical disc 20. In the display memory 42, image information to be displayed in the display window (not illustrated) which is formed in the CRT display device 24, that is, magnified, reduced, rotated, inserted or reversed black and white image information of the page memory 40, are stored. The display control device 44 controls the display process of the CRT display device 24. The image processing module 14 comprises the enlargement/reduction circuit 46 which performs enlargement/reduction of image information, the length and breadth conversion circuit 48 which performs a rotating of the image information by length and breadth conversion of the image information, the compression/expansion circuit (CODEC) 50 which performs the encode process by compressing (reduce redundancy) and expanding (restore the reduced redundancy), the scanner interface 52 for the scanner 18, the printer interface 54 for the printer 25 and the internal bus 56 which connects the enlargement/reduction circuit 46 and the length and breadth conversion circuit 48, the compression/expansion circuit 50, the scanner interface 52 and the printer interface 54. The communication control module 16 comprises the communication interface 58, which supplies retrieval data transmitted through the communication line to the main memory 38 and transmits the image information corresponding to the received retrieval data. Further, it supplies image information to be stored n the optical disc 20 to the page memory 40 and, at the same time, supplies retrieval data corresponding to the image information to the main memory 38. The details of the communication interface 58 will be described later. The system bus 30 is the bus for transmitting/receiving control data among the modules and connects the control module 10, the memory module 12., the image process module 14 and the communication control module 16. The image bus 32 is the bus for transmitting/receiving image information and connects the memory module 12, the image process module 14 and the communication control module 16. The scanner 18 is, for instance, a two-dimensional scanner which generates electric signals corresponding to image information on an original document by scanning the surface of the document two-dimensionally with laser beam light. The optical disc device 22 functions as a storage means and stores image information read by the scanner 18 in the optical disc 20 successively and retrieves image information corresponding to retrieval data designated by the keyboard 23, etc. from the optical disc 20. The keyboard 23 is used to input peculiar retrieval data corresponding to image information to be stored in the optical disc 20 and various operating commands such as storage, retrieval, edit process, etc. Further, the mouse 29 is used to select or direct the display content at the position where the cursor is positioned (for example, various operational modes, designation of area for edited image or icon) by giving an instruction at a desired position by moving the cursor (not illustrated) being displayed on the display window of the CRT display device 24 in the vertical and horizontal directions. The CRT display device (Cathode Ray Tube display device) 24 operates to display image information read by the scanner 18 or retrieved from the optical disc 20. This CRT display device 24 is a multi-window type display device which has, e.g., four windows (not illustrated) formed in the display area so that four different sets of image information can be displayed simultaneously. Each set of the image information displayed on each window can be magnified, reduced, rotated or scrolled independently. The printer 25 is to print and output (hard copy) image information read through the scanner 18, retrieved from the optical disc 20 or displayed on the CRT display device 24. The magnetic disc device 27 stores various process programs in the magnetic disc 28 which is loaded on this magnetic disc device 27 and further, stores retrieval data composed of retrieval data input from the keyboard 23 and storage address, image size, etc. on the optical disc 20 in which image information corresponding to the retrieval data is stored. The communication interface 58 will now be explained in detail referring to the block diagram shown in FIGURE 2. In this figure, the CPU 34, which is a first control means, performs various processes including the storage, retrieval and edit process of image information through the system bus 30 as described above. It is connected through the system bus 30 to the communication interface 58, which is one of the process modules. The communication interface 58, which acts as a communication means, comprises the common memory 70, which is accessed by multiple devices through fixed buses and composed of the common memory 70a which is accessed through the system bus 30 and the local bus 63 and the common memory 70b which is accessed through the local buses 63 and 67. To the local bus 63, the sub CPU 62, DMAC (Direct Memory Access Controller) 64, interruption controller 80, ROM (Read Only Memory) 81, RS-232C interface controller 82, GP-IB (General Purpose-Interface Bus) interface controller 83 and SCSI interface controller 84 are connected in addition to the common memories 70a and 70b. The DMAC 64 performs data transmitting/ receiving between the common memories 70a and 70b and the interface controllers 82, 83 and 84 without the sub CPU 62. The interruption controller 80 controls various interruptions of the sub CPU 62. Further, ROM 81 is a read only memory to store the sub CPU 62 control program and prescribed data. RS-232C interface controller 82, GP-IB interface controller 83 and SCSI interface controller 84 control unillustrated external devices which are connected to these interface controllers 82, 83 and 84. To the local bus 67, the sub CPU 66, LAN (Local Area Network) interface controller 85 having the DMAC function and ROM 86 have been connected in addition to the common memory 70b. The sub CPU 62 and sub CPU 66 act as second control means in this embodiment. The LAN interface controller 85 having the DMAC function performs data transmitting/receiving between the common memory 70b and the LAN interface controller 85 without the sub CPU 66 and controls the local area network which is an unillustrated external device. The ROM 86 is a read only memory to store the sub CPU 66 control program and prescribed data. Next, the operation of the image processing apparatus of the present invention in the above construction is explained referring to the control system flow shown in FIGURE 3. Further, FIGURE 3 shows the status when the interface controllers 82, 83, 84 and 85 are controlled according to the instructions from the CPU 34. First, for instance, the operation when data are input from RS-232C interface Controller 82 is explained. To drive the communication control interface 58, a command is given to the sub CPU 62 from the CPU 34. This command is given to the sub CPU 62 in such a way that the CPU 34 writes the command in the unillustrated command area of the common memory 70 and inputs an interrupt request to the sub CPU 62 by driving the unillustrated interrupt line. When it has received this interrupt request, the sub CPU 62 reads out the command stored ih the command area of the common memory 70a through the local bus 63 and starts the process corresponding to the command. That is, the DMAC 64 is started for a subject designated by the command, for instance, RS-232C interface controller 82, and then, data transfer is performed between RS-232C interface Controller 82 and the common memory 70a under the control of the DMAC 64. When the data transfer ends, the sub CPU 62 stores the status in the unillustrated status area of the common memory 70a and generates an interrupt request to the CPU 34 by driving the unillustrated interrupt line. When it receives this interrupt request, the CPU 34 reads the status in the common memory 70a and the transferred data stored in the common memory 70a through the system bus 30 and stores it in, for instance, the page memory 40. The series of input operations then ends. Next, the operation when data are output to, for instance, the RS-232C interface controller 82 is explained. First, a command is given to the sub CPU 62 from the CPU 34 in the same manner as above. That is, the CPU 34 writes a command in the command area of the common memory 70a through the system bus 30. Then, the CPU 34 writes data to be transmitted in the unillustrated data area of the common memory 70a through the system bus 30 and inputs an interrupt request to the sub CPU 62 by driving the unillustrated interrupt line. Upon receiving this interrupt request, the sub CPU 62 reads out the command stored in the command area of the common memory 70a through the local bus 63, analyzes this command, and starts the process corresponding to the command. That is, the DMAC 64 is started and data stored in the data area of the common memory 70a are output to RS-232C interface controller 82 under the control of the DMAC 64. When the data transfer ends, the sub CPU 62 stores the status in the status area of the common memory 70a and generates an interrupt request to the CPU 34 by driving the unillustrated interrupt line. Upon receiving this interrupt request, the CPU 34 reads the status stored in the common memory 70a through the system bus 30. Thus, the series of data output operations ends. The data transfer to GP-IB interface Controller 83 and SCSI interface 84 is carried out in the same manner as above and, therefore, the explanation thereof will be omitted. Next, the operation when data are input from LAN interface controller 85 is explained. First, a command is given to the sub CPU 62. In this case, the CPU 34 writes a command in the command area of the common memory 70a through the system bus 30 and inputs an interrupt request to the sub CPU 62 by driving the unillustrated interruption line. Then, the sub CPU 62 reads out the command stored in the command area of the common memory 70a through the local bus 63, analyzes it, and starts the process corresponding to the command. In this case, when recognizing that the command is a start command to LAN interface controller 85, the sub CPU 62 writes a command in the unillustrated command area of the common memory 70b through the local bus 63 and at the same time, generates an.interrupt request to the sub CPU 66 by driving the unillustrated interrupt line. On receiving this interrupt request, the sub CPU 66 reads out the command stored in the command area of the common memory 70b through the local bus 67, analyzes it, and starts the process corresponding to that command. That is, the sub CPU 66 starts the DMAC housed in LAN interface controller 85, which is designated by the command and thereafter, the data transfer is carried out between LAN interface controller 85 and the common memory 70b under the control of the DMAC. When the data transfer ends, the sub CPU 66 stores the status in the unillustrated status area of the common memory 70b and generates an interrupt request to the sub CPU 62 by driving the unillustrated interruption line. Upon receiving this interrupt request, the sub CPU 62 transfers the status from the common memory 70b to the common memory 70a through the local bus 63 and, at the same time, transfers the transfer data stored in the common memory 70b to the common memory 70a. When this data transfer from the common memory 70b to the common memory 70a ends, the sub CPU 62 generates an interrupt request to the CPU 34 by driving the unillustrated interrupt line. Upon receiving this interrupt request, the CPU 34 takes the status from the common memory 70a through the system bus 30 and at the same time, taking the transfer data stored in the common memory 70a, stores it in, for instance, the page memory 40. Thus, the series of input operation ends. Next, the operation, for instance, when data are output to the LAN interface controller 85 is explained. First, in the same manner as above, a command is given from the CPU 34 to the sub CPU 62. That is, the CPU 34 writes a command in the command area of the common memory 70a through the system bus 30. Then, it writes data to be transmitted out in the data area of the common memory 70a through the system bus 30 and generates interrupt request to the sub CPU 62 by driving the unillustrated interrupt line. On receiving this interrupt request, the sub CPU 62 reads out the command stored in the command area of the common memory 70a through the local bus 63, analyzes it, and starts the process corresponding to that command. In this case, when recognizing that the command is a start command to LAN interface controller 85, the sub CPU 62 writes the command in the command area of the common memory 70b through the local bus 63, transfers data in the data area of the common memory 70a to the data area of the common memory 70b and generates an interrupt request to the sub CPU 66 by driving the unillustrated interruption line. On receiving this interrupt request, the sub CPU 66 reads out the command stored in the command area of the common memory 70b through the local bus 67, analyzes it, and starts the process corresponding to the command. That is, the sub CPU 66 starts the DMAC housed in LAN interface controller 85, which is designated by the command, and thereafter reads out data stored in the data area of the common memory 70b and transmits the data to LAN interface controller 85, which in turn transmits the data to an unillustrated line. When the data transfer ends in this manner, the sub CPU 66 stores a status signal in the status area of the common memory 70b and generates an interrupt request to the sub CPU 62 by driving the unillustrated interrupt line. On accepting this interrupt request, the sub CPU 62 transfers the status signal from the common memory 70b to the common memory 70a through the local bus 63. When this status transfer from the common memory 70b to the common memory 70a ends, the sub CPU 62 generates an interrupt request to the CPU 34 by driving the unillustrated interrupt line. The CPU 34 takes the status stored in the common memory 70a through the system bus 30. The series of data transfer operations then ends. As described above, the image processing apparatus provided by the present invention is of such a structure that the common memory 70 and the sub CPUs 62 and 66 are provided in the communication interface 58, which transmits/receives data between this image processing apparatus and external devices. The common memory 70 is accessed when accessing the communication interface 58 from the CPU 34, the sub CPUs 62 and 66 provided in the communication interface 58 control external devices connected to the interface controllers 82, 83, 84 and 85 pursuant to the content of the common memory 70, and image information are transmitted/received through the common memory 70 as described above. It is possible for the CPU 34 and the sub CPUs 62 and 66 to operate in parallel and independently, and, furthermore, part of the processes that in the past were performed by the CPU 34 can be now performed by the sub CPUs 62 and 66. Therefore, the load applied to the CPU 34 is reduced and the entire image processing apparatus is able to operate with the prescribed performance. Next, the communication interface 58 will be explained in detail referring to the block diagram shown in FIGURE 4. In this drawing, the CPU performs various processes including storage, retrieval, and editing of image information through the system bus 30, as described above, and is connected to the communication interface 58, which is one of the process modules. The communication interface 58 is provided with 4 master devices which can become the bus master; the sub CPU-A 62, sub CPU-B 66, DMAC-A 64 and DMAC-B 68. The bus master referred to here is a module which has acquired the right to use the memory bus 61 and is allowed to use the memory bus 61 exclusively. The sub CPU-A 62 and DMAC-A 64 are connected to the 3-way round robin type mediation control circuit 60 through the local bus A 63. The sub CPU-B 66 and DMAC-B 68 are connected to the mediation control circuit 60 through the local bus B 67. The mediation control circuit 60 gives the right of using the memory bus 61 to one of the sub CPU-A 62, sub CPU-B 66, DMAC-A 64 and DMAC-B 68 and allows access to the common memory 70. Further, the mediation control circuit 60 is also connected to the system bus 30 so that the CPU 34 and all memories in the memory module 12 can be accessed. The common memory 70 is connected to the Sub CPU-A 62, Sub CPU-B66, DMAC-A6 4 and DMAC-B 68 through the memory bus 61 and the mediation control circuit 60 and is commonly used by these devices. Further, the interface controller 72 is connected to the DMAC-A 64 and an unillustrated input/output device is connected to the interface controller 72. For instance, RS 232C interface controller, GP-IB interface controller, SCSI interface controller, etc. are used for the interface controller 72. The LAN controller 74 is connected to the DMAC-B 68 and various input/output devices are connected to the LAN controller 74 through unillustrated lines. The concept of the above-described embodiment will be explained referring to FIGURE 5: That is, FIGURE 5 shows the state of the bus mediation when there are 5 bus masters. In this drawing, either one of Bus Master 2 and Bus Master 3 is selected as a candidate allowed to use the bus by the "HOLD REQUEST/HOLD ACKNOWLEDGE SYSTEM" bus mediation PRC (Priority Right Control 2). Then, the selected bus master is regarded as Bus Master A. Similarly, either one of Bus Master 4 and Bus Master 5 is selected by the HOLDREQ/HOLDACK system bus mediation PRC2 and the selected bus master is regarded as Bus Master B. The above is the bus mediation in Phase 1. Then, a bus master which can use the bus is selected from 3 bus masters; Bus Master A, Bus Master B and Bus Master 1 (Bus Master C) by the "Round Robin Type" bus mediation. This is the second stage bus mediation. The only bus master which is allowed to access the bus is selected when the bus mediation in Phase 2 ends. Next, the operation to acquire the right to use the memory bus 61 in the communication interface 58 will be explained in the construction shown in FIGURE 4 referring to the flowcharts shown in FIGURES 6A and 6B. The flowchart shown in FIGURE 6A illustrates a former part of the operation, while the flowchart shown in FIGURE 6B illustrates a latter part of the operation. In Phase 1 (Steps S1 - S10) the bus master for the local buses A 63 and B 67 is decided by the HOLD REQUEST/HOLD ACKNOWLEDGE system. Hereinafter, the bus mediation for the local bus A 63 is explained. Normally, the Sub CPU-A 62 has the right to use the local bus A 63 and it operates as the bus master. Now, when the HOLD REQUEST signal which is a bus using request signal is transmitted from the DMAC-A 64 and it is acknowledged by the Sub CPU-A 62 (Step S3), the HOLD ACKNOWLEDGE signal which is a bus use approval signal is returned to the DMAC-A 64 and the local bus A 63 is placed in the hold state (Step S4). Thus, the DMAC-A 64 acquires the right to use the memory bus 61 and becomes the bus master. When receiving the HOLDACK signal, the DMAC-A 64 transmits out a command to the mediation control circuit 60 through the local bus A 63 (Step S5). Further, the same operations as above are carried out (Steps S7 - S10) for the Sub CPU-B 66 and DMAC-B 68 at the local bus B 67 side and therefore, the explanation of these operation is omitted here. When memory access is requested from the CPU 34, a command is transmitted to the mediation control circuit 60 (Step S5) from the CPU 34 through the system bus 30, as in the above. Now, the operations in Phase 1 end and the operations in Phase 2 (Steps S11 - S13) start. That is, it is first judged if there is the access request command for the common memory (Step S11). When it is judged there is no command, the bus mediation operation ends. When it is judged that there is the command, the bus master for the memory bus 61 is decided by the round robin system (Step S12). The access request for the common memory 70 is available in 3 kinds; access by the CPU 34 through the system bus 30, access from the local bus A63, and access from the local bus B67. These accesses are controlled by the mediation control circuit 60 adopting the 3-way round robin system and deciding upon a bus master for the memory bus 61. The common memory 70 is then accessed by the selected bus master (Step S13). The above completes the bus mediation operation. Further, when ending the access to the common memory 70, the DMAC-A 64 stops transmitting the HOLD REQUEST signal. Thus, the sub CPU-A 62 or the sub CPU-B 66 stops transmitting the HOLD ACKNOWLEDGE signal and returns to the bus master for the local bus A 63 or the local bus B 67. As described above, because the bus mediation control has been made in a so-called hierarchic structure, where multiple groups, each of which is composed of a pair of Sub CPU-A and DMAC-A (CPU-B and DMAC-B), among multiple bus masters are formed. The Sub CPU-A and DMAC-A (CPU-B and DMAC-B), a bus master is decided using, for instance, HOLD REQUEST/HOLD ACKNOWLEDGE system. From the thus decided bus masters representing respective groups, a bus master having the right to use the bus is decided using, for instance, the round robin system. No special circuit is needed for the bus mediation control according to the HOLD REQUEST/HOLD ACKNOWLEDGE system. The bus mediation control circuit according to the round robin system will not be complicated, even when the number of master devices as bus masters increases, and therefore, an increase in the amount of hardware elements supplied for an image processing apparatus can be suppressed. Further, in the above embodiment, a case where the CPU and the DMA controller are used as the lower hierarchy bus masters is explained, but the present invention is not limited to that case and is similarly applicable to other cases if a bus master can be decided by the HOLD REQUEST/HOLD ACKNOWLEDGE system or other systems and has the same effect as in the above embodiment. Further, although the present invention applied to an image processing apparatus having a communication interface has been described in the above embodiment, it is not limited to this embodiment but is broadly applicable to devices which require dispersion of load on computer systems, etc. with the same effect as in the above embodiment. As described above, the present invention can provide an extremely preferable image processing apparatus. While there have been illustrated and described what are at present considered to be preferred embodiments of the present invention, it will be understood by those skilled in the art that various changes and modifications may be made, and equivalents may be substituted for elements thereof without departing from the true scope of the present invention. In addition, many modifications may be made to adapt a particular situation or material to the teaching of the present invention without departing from the central scope thereof. Therefore, it is intended that the present invention not be limited to the particular embodiment disclosed as the best mode contemplated for carrying out the present invention, but that the present invention include all embodiments falling within the scope of the appended claims. The foregoing description and the drawings are regarded by the applicant as including a variety of individually inventive concepts, some of which may lie partially or wholly outside the scope of some or all of the following claims. The fact that the applicant has chosen at the time of filing of the present application to restrict the claimed scope of protection in accordance with the following claims is not to be taken as a disclaimer of alternative inventive concepts that are included in the contents of the application and could be defined by claims differing in scope from the following claims, which different claims may be adopted subsequently during prosecution, for example for the purposes of a divisional application.

## Claims

1. An image processing apparatus for controlling the communication of image information between a recording medium (20) and external information handling means, which comprises at least one interfacing means (82, 83, 84) for interfacing the external information handling means to the apparatus and means (22) for driving the recording medium (20) to store the image information together with associated retrieval information and to reproduce a desired image information from the recording medium (20) by using the associated retrieval information, characterised in that the apparatus further comprises:
first processing means (34) for commanding the communication of the image information between the recording medium (20) and the external information handling means and for supplying associated information for communicating the image information;
storage means (70) for storing the associated communication information from the first processing means (34); and
second processing means (62) responsive to the first processing means (34) for controlling the interfacing means (82, 83, 84) and the driving means (22) to communicate the image information under the control of the associated communicating information stored in the storage means (70). 2. Image processing apparatus according to claim 1, further characterised by second interfacing means 85 for interfacing external information handling means to the apparatus, and the storage means comprising first and second storage means (70a, 70b);
the second processing means (62) also being arranged to control the communication of image information between the recording medium (20) and the external information handling means and to supply associated information for communicating the image information when the communication of the image information through the second interfacing means (85) is commanded by the first processing means (34);
the associated communicating information from the second processing means (62) being stored in first storage means 70a; and
third processing means (66) responsive to the second processing means (62) for controlling the second interfacing means (85) and the driving means (22) to communicate the image information under the control of the associated communicating information stored in the second storage means (70b). 3. An image processing apparatus according to claim 1 or claim 2 recording medium is an optical disc. 4. An image processing apparatus according to any preceding claim, wherein said interfacing means includes an RS-232C interface controller (82). 5. An image processing apparatus according to any preceding claim, wherein said interfacing means includes a GP-IB interface controller (83). 6. An image processing apparatus according to any preceding claim, wherein said interfacing means includes an SCSI interface controller (84). 7. An image processing apparatus according to a.p.c. wherein said second processing means comprises a sub CPU (62). 8. An image processing apparatus according to claim 7, wherein said second processing means further comprises a direct memory access controller (64). 9. An image processing apparatus according to claim 7 or claim 8 wherein said second processing means further comprises an interrupt controller (80). 10. An image processing apparatus according to any of claims 7 to 9, wherein said second processing means further comprises a read only memory (ROM 81). 11. An image processing apparatus according to claim 1, wherein said second interfacing means comprises a LAN interface controller (85). 12. An image processing apparatus according to claim 2, wherein said third processing means comprises a sub CPU (66). 13. An image processing apparatus according to claim 12, wherein said third processing means further comprises a direct memory access controller (85). 14. An image processing apparatus according to claim 12 or claim 13 wherein said third processing means further comprises a read only memory (ROM 86).

Fig. 1

Fig. 2

Fig. 3

Fig. 4

Fig. 5

EP 0 411 836 A2

START

**S7**

NO | IS THERE ACCESS REQUEST FROM MAIN CPU TO MEMORY ? **S1**
NO | IS THERE ACCESS REQUEST FROM DMAC-A TO MEMORY ? **S3**
NO | IS THERE ACCESS REQUEST FROM DMAC-B TO MEMORY ?

YES

YES

YES

**S4** — SELECT DMAC-A AS BUS MASTER FOR LOCAL BUS A BY HOLD-REQUEST HOLD-ACKNOWLEDGE

SELECT DMAC-B AS BUS MASTER FOR LOCAL BUS B BY HOLD-REQUEST HOLD-ACKNOWLEDGE

**S6** | IS THERE ACCESS REQUEST FROM SUB CPU-A TO MEMORY ? YES **S10**

**S8**

IS THERE ACCESS REQUEST FROM SUB CPU-B TO MEMORY ? YES

NO

NO

**S2** — SUPPLY COMMAND TO MEDIATION CONTROLLER

SUPPLY COMMAND TO MEDIATION CONTROLLER **S5**

SUPPLY COMMAND TO MEDIATION CONTROLLER

**S9**

to Fig. 6B

# Fig. 6 A

from
Fig.6A

IS
ACCESS COMMAND
FOR COMMON MEMORY
APPLIED TO MEDIATION
CONTROLLER ?

S11

NO

YES

SELECT BUS MASTER
OF MEMORY BUS BY
ROUND ROBIN SYSTEM

S12

SELECTED BUS MASTER
ACCESS
COMMON MEMORY

S13

END

Fig. 6 B